# EUROPEAN PATENT APPLICATION

(11) **EP 4 804 018 A1**
(43) Date of publication of application: **09.09.2026**
(21) Application number: 26162477.9
(22) Date of filing: 05.03.2026
(51) Int. Cl.: G06F 8/65

(54) **ELECTRONIC APPARATUS, CONTROL METHOD AND PROGRAM**

(30) Priority: 06.03.2025 JP 2025035859
(71) Applicant: Canon Kabushiki Kaisha, Tokyo 146-8501 (JP)
(72) Inventor: HAMADA, Naru, Tokyo, 146-8501 (JP)
(74) Representative: TBK

(57) **Abstract**

An electronic apparatus (100) determines the presence/absence of update firmware of the electronic apparatus by communicating with an external apparatus, determines appropriateness of a firmware update for the electronic apparatus, and in a case where a type of the firmware of the electronic apparatus is different from a type of the update firmware, determines that the firmware update is inappropriate.

## Description

### TECHNICAL FIELD

The present disclosure relates to firmware update control for an electronic apparatus.

### BACKGROUND

Japanese Patent Laid-Open No. 2005-352781 describes a method in which a user stores a firmware update file in a recording medium such as a memory card and then an electronic apparatus reads out the firmware update file from the recording medium and performs a firmware update.

In Japanese Patent Laid-Open No. 2005-352781, it is troublesome for the user to store the firmware update file in the recording medium from the home page of the manufacturer of the electronic apparatus or the like and attach the recording medium to the electronic apparatus. In addition, since the user needs to periodically confirm that the latest firmware of the electronic apparatus is updated, security protection of the electronic apparatus requires an attention.

Japanese Patent Laid-Open No. 2014-85759 describes a method in which an electronic apparatus inquires about necessity of a firmware update periodically or at the time of connection to a network, and when the firmware update is possible, the user is notified of it and downloads a firmware update file to perform the firmware update.

Furthermore, Japanese Patent Laid-Open No. 2020-135577 describes a method in which the manufacturer of an electronic apparatus provides, to a specific customer, custom firmware for the specific customer acquired by adding a function to standard firmware for an unspecified customer or changing the function of the standard firmware in accordance with the request of the specific customer.

In Japanese Patent Laid-Open No. 2014-85759, even if the firmware of the electronic apparatus used by the user is custom firmware, when a standard firmware update notification is received via a network, the custom firmware may be updated to standard firmware unless the user recognizes that the firmware of the electronic apparatus is custom firmware. In this case, the user cannot use the added or changed function of the custom firmware.

### SUMMARY

In Japanese Patent Laid-Open No. 2014-85759, even if the firmware of the electronic apparatus used by the user is custom firmware, when a standard firmware update notification is received via a network, the custom firmware may be updated to standard firmware unless the user recognizes that the firmware of the electronic apparatus is custom firmware. In this case, the user cannot use the added or changed function of the custom firmware.

The present disclosure has been made in consideration of the aforementioned problems, and provides technical advantages in preventing a user from inadvertently performing an update to a different type of firmware in a firmware update via a network.

The present disclosure in its first aspect provides an electronic apparatus as specified in claim 1. Optional features are specified in claim 2 to 12.

The present disclosure in its second aspect provides a control method as specified in claim 13.

The present disclosure in its third aspect provides a computer program as specified in claim 14.

According to the present disclosure, it is possible to prevent the user from inadvertently performing an update to a different type of firmware in a firmware update via a network.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a block diagram exemplifying an apparatus configuration according to a first embodiment;
Fig. 2 is a view exemplifying screen transition at the time of a firmware update according to the first embodiment;
Fig. 3A is a flowchart exemplifying firmware update processing using a recording medium according to the first embodiment;
Fig. 3B is a flowchart exemplifying the firmware update processing using the recording medium according to the first embodiment;
Fig. 4A is a flowchart exemplifying firmware update processing via a network according to the first embodiment;
Fig. 4B is a flowchart exemplifying the firmware update processing via the network according to the first embodiment;
Fig. 4C is a flowchart exemplifying the firmware update processing via the network according to the first embodiment;
Fig. 4D is a flowchart exemplifying the firmware update processing via the network according to the first embodiment;
Fig. 4E is a flowchart exemplifying the firmware update processing via the network according to the first embodiment;
Fig. 5 is a view exemplifying firmware update information acquired at the time of a firmware update via the network according to the first embodiment; and
Fig. 6 is a flowchart exemplifying firmware update processing via a network according to a second embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

This embodiment will describe an example in which an electronic apparatus according to the present disclosure is applied to an image capturing apparatus such as a digital video camera, and the electronic apparatus updates firmware via a network.

Note that the electronic apparatus according to the present embodiment is applicable to not only the digital video camera but also general electronic apparatuses requiring a firmware update, such as a printer and a multifunction peripheral.

### [First Embodiment]

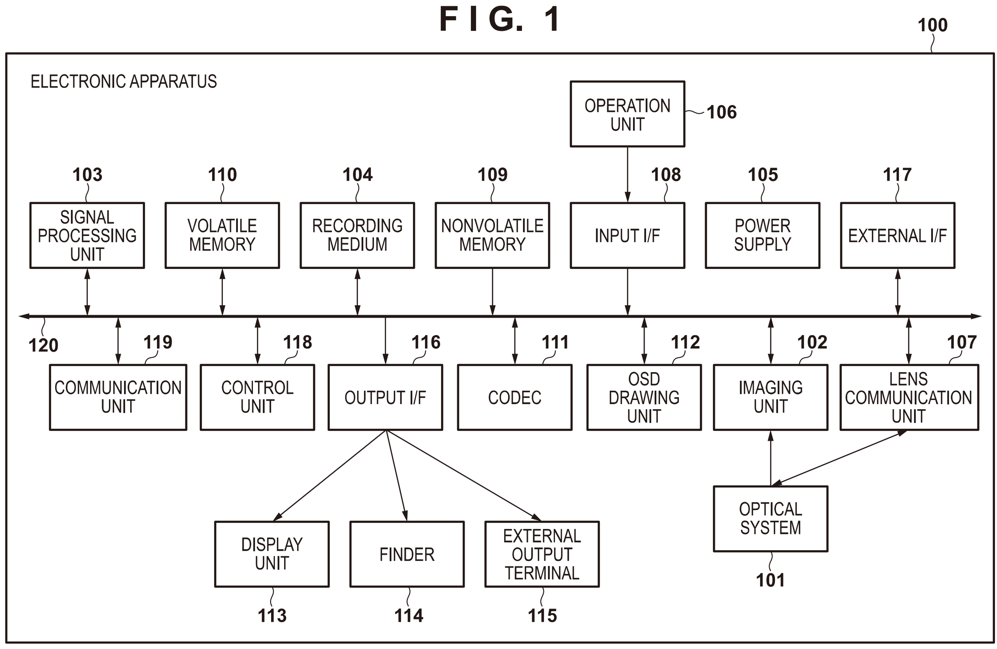

The first embodiment will be described first with reference to Figs. 1 to 5.

Fig. 1 is a block diagram exemplifying the configuration of an electronic apparatus according to the first embodiment.

An electronic apparatus 100 includes an optical system 101, an imaging unit 102, a signal processing unit 103, a recording medium 104, a power supply 105, an operation unit 106, a lens communication unit 107, an input interface (I/F) 108, a nonvolatile memory 109, and a volatile memory 110. In addition, the electronic apparatus 100 includes a codec 111, an OSD drawing unit 112, a display unit 113, a finder 114, an external output terminal 115, an output I/F 116, an external I/F 117, a control unit 118, and a communication unit 119. The respective components of the electronic apparatus 100 are connected to be able to transmit/receive data via a data bus 120.

The optical system 101 includes a lens group including a zoom lens and a focus lens, and a shutter having an aperture function.

The imaging unit 102 includes an image sensor formed by a CCD or CMOS element that converts a subject image into an electrical signal, and an A/D converter that converts an analog image signal output from the image sensor into a digital signal. The imaging unit 102 converts subject image light whose image is formed by the optical system 101 into an electrical signal by the image sensor, performs noise reduction processing or the like, and outputs a digital image signal.

The signal processing unit 103 performs predetermined resize processing, trimming processing, color conversion processing, and distortion correction processing for image data generated by the imaging unit 102, and outputs the thus acquired data to the codec 111. The signal processing unit 103 performs predetermined processing for sound data collected by a microphone (not shown), and outputs the thus acquired data to the codec 111.

The codec 111 encodes the image data and the sound data processed by the signal processing unit 103 by a moving image compression method such as MPEG2 or H.264, and records the thus acquired data as a moving image file in the recording medium 104. The codec 111 decodes a moving image file read out from the recording medium 104 and outputs the thus acquired data to the output I/F 116. The image data and sound data decoded by the codec 111 are output to the display unit 113, the finder 114, a monitor connected to the external output terminal 115, and the like via the output I/F 116, and reproduced.

The recording medium 104 is a storage device in which the image data encoded by the codec 111 can be written and from which recorded encoded image data and its associated data can be read out. The recording medium 104 is a flash memory or a hard disk incorporated in the electronic apparatus 100, such as a memory card or a hard disk detachable from the electronic apparatus 100.

The power supply 105 is a commercial AC power supply (AC power supply) or a battery, and supplies necessary power to the respective components of the electronic apparatus 100.

The operation unit 106 includes a switch for turning on/off the power supply 105 of the electronic apparatus 100, a menu button, a cross key, an assigned button to which a desired function can be assigned, or an input device such as a touch panel. A plurality of assigned buttons are mounted on the electronic apparatus 100, it is possible to assign a user's desired function to each assigned button, and a setting for assigning the function to each assigned button is stored in at least one of the nonvolatile memory 109 and the volatile memory 110. An operation signal accepted by the operation unit 106 is output to the control unit 118 or the external I/F 117 via the input I/F 108 and the data bus 120.

The lens communication unit 107 communicates information such as the attachment information, the focus position, and the angle of view of the optical system 101 with the optical system 101.

The nonvolatile memory 109 is an electrically erasable/recordable EEPROM or flash memory. The nonvolatile memory 109 stores constants and programs for operating the control unit 118, the model information of the electronic apparatus 100, and the like. The programs of the present embodiment refer to programs for executing flowcharts that will be described later. The nonvolatile memory 109 also stores firmware for controlling the hardware of the electronic apparatus 100 and display data such as OSD data. In the present embodiment, firmware types include standard firmware for an unspecified customer, and custom firmware for a specific customer acquired by adding a function to the standard firmware or changing the function of the standard firmware.

The volatile memory 110 is a RAM that temporarily stores a program read out from the nonvolatile memory 109, constants and variables for executing the program, and the like. In addition, the volatile memory 110 is used as a work memory of the control unit 118, the signal processing unit 103, the codec 111, and the OSD drawing unit 112. The volatile memory 110 is also used as a buffer memory that temporarily holds the image signal generated by the imaging unit 102, the image data processed by the signal processing unit 103 and the codec 111, and the like, or as an image display memory of the display unit 113 and the finder 114.

The OSD drawing unit 112 renders On Screen Display (OSD) data of the electronic apparatus 100 in the VRAM of the volatile memory 110 under the control of the control unit 118. The OSD data includes items such as icons and character strings representing the state and setting of the electronic apparatus 100, an AF frame, a marker, and a menu for making various settings. Resource data such as icons and characters forming the OSD are stored in the nonvolatile memory 109, and the OSD drawing unit 112 reads out the resource data from the nonvolatile memory 109, and renders them in the VRAM.

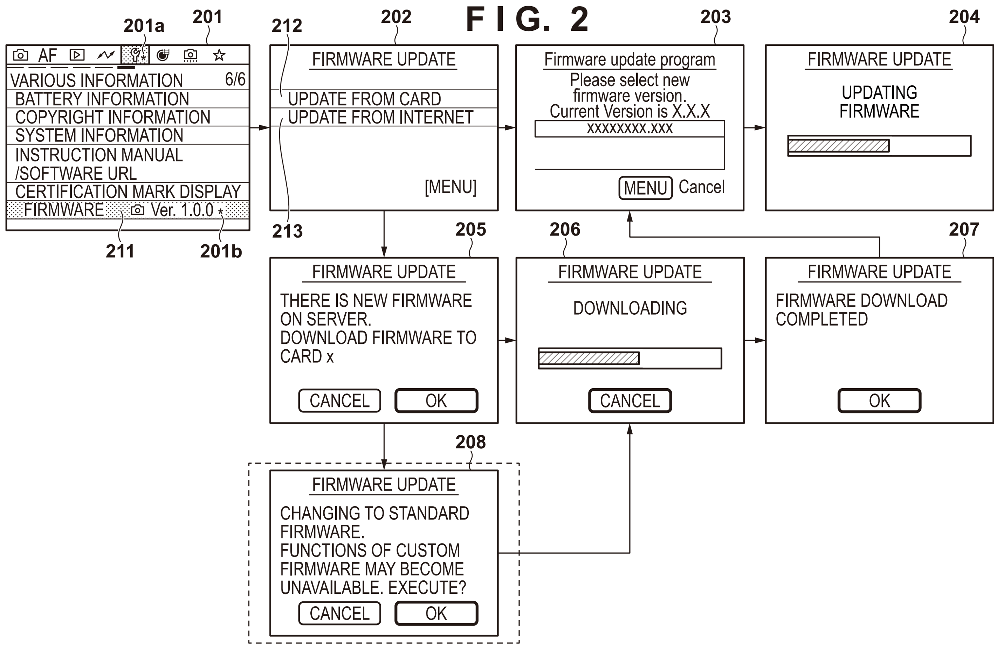

The display unit 113 performs display of a live view image generated by the imaging unit 102, display of a shot image, display of an image to be reproduced, display of a Graphical User Interface (GUI), exemplified in Fig. 2, for accepting a user operation, and the like. The display unit 113 is, for example, a display device such as a liquid crystal display or an organic EL display. The display unit 113 may be integrated with the electronic apparatus 100, or may be an external apparatus connected to the electronic apparatus 100. The electronic apparatus 100 need only be able to be connected to the display unit 113 and control display on the display unit 113.

The finder 114 is a look-through type electronic viewfinder (EVF). The user can visually recognize an image displayed on the finder 114, and can confirm the focus and composition of the captured subject image through the optical system 101.

The output I/F 116 outputs, to the display unit 113, the finder 114, the external output terminal 115, and the external I/F 117, a display signal generated by the control unit 118 based on image data captured by the imaging unit 102, image data processed by the signal processing unit 103, OSD data generated by the OSD drawing unit 112, and the like.

The external output terminal 115 is a terminal that complies with a standard such as the SDI or HDMI^{®} standard and externally outputs image data generated by the imaging unit 102 and the signal processing unit 103.

The output I/F 116 includes a mixer circuit, and can output image data and OSD data by superimposing them, and output data resized in accordance with each output destination (the display unit 113, the finder 114, and the external output terminal 115). The OSD of the same contents may be displayed on each output destination and different contents may be displayed by a method to be described later.

The external I/F 117 can be attached with an external expansion unit to be described later, and serves as an interface for performing input/output operations of an image signal, a sound signal, and a control signal with the expansion unit.

The control unit 118 is an arithmetic processor such as a CPU or an MPU that generally controls the entire electronic apparatus 100, and executes programs stored in the nonvolatile memory 109 to be described later, thereby implementing control processing to be described later. Note that instead of controlling the entire apparatus by the control unit 118, a plurality of hardware components may control the entire apparatus by sharing processing.

The communication unit 119 is connected to a network to transmit/receive an image signal, a sound signal, and other various kinds of information to/from an external apparatus such as a server connected by wireless communication or wired communication. Note that the network includes the Internet and a telephone line used by a large number of unspecified users, and a Wide Area Network (WAN) and a Local Area Network (LAN) shared by unspecified or specific users.

### <Control Processing>

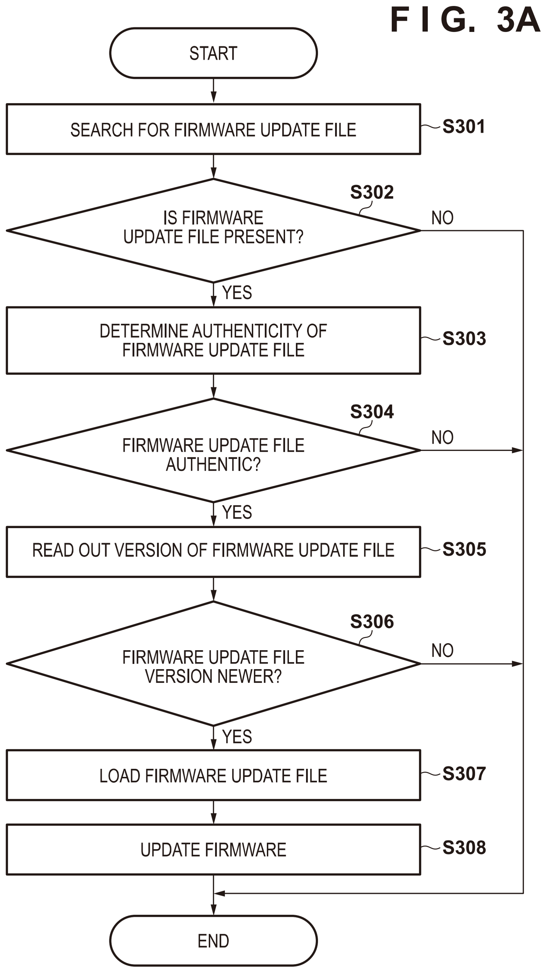

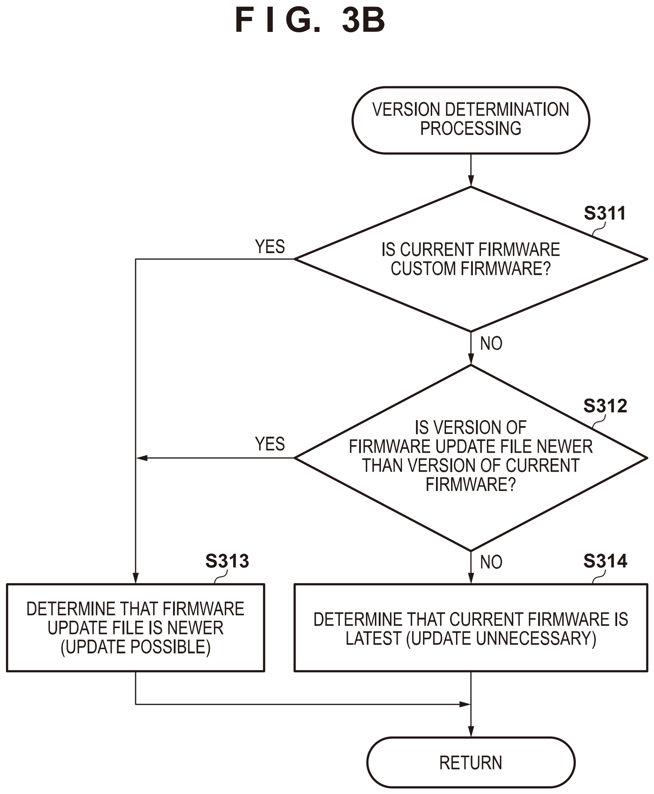

Processing in which the electronic apparatus 100 of the present embodiment updates the firmware using a firmware update file stored in the recording medium 104 will be described next with reference to Figs. 2, 3A, and 3B.

Fig. 2 is a view exemplifying screen transition at the time of the firmware update for the electronic apparatus 100 according to the present embodiment. Figs. 3A and 3B are flowcharts exemplifying processing in which the electronic apparatus 100 of the present embodiment updates the firmware using the recording medium 104.

The processing shown in Figs. 3A and 3B is implemented when the control unit 118 controls the respective components of the electronic apparatus 100 by loading the program stored in the nonvolatile memory 109 into the volatile memory 110 and executing the program. The processing shown in Fig. 3A starts when the control unit 118 detects attachment of the recording medium 104 to the electronic apparatus 100.

In step S301, the control unit 118 searches the recording medium 104 for a firmware update file, and advances to step S302. Note that the firmware update file may be arranged in a root directory or a specific directory specified by the electronic apparatus 100.

In step S302, when, as a result of the search for the firmware update file in step S301, it is determined that the firmware update file is present, the control unit 118 advances to step S303, and when it is determined that there is no firmware update file, the control unit 118 ends the processing.

In step S303, the control unit 118 reads out all or part of the firmware update file from the recording medium 104, loads it into the volatile memory 110, and determines the authenticity of the firmware update file. The authenticity of the firmware update file is determined to prevent the firmware update from being executed using an unauthorized firmware update file. As an example, checksum data may be referred to.

In step S304, when, as a result of determining the authenticity of the firmware update file in step S303, it is determined that the file is authentic, the control unit 118 advances to step S305, and when it is determined that the file is not authentic, the control unit 118 ends the processing.

In step S305, the control unit 118 reads out the version of the firmware from the data of the firmware update file loaded into the volatile memory 110. As an example, the storage area of the version information may be at a specific offset position from the beginning of the data.

In step S306, the control unit 118 determines, by the processing shown in Fig. 3B, which of the version of the firmware update file and the version of the current firmware of the electronic apparatus 100 is newer.

Fig. 3B exemplifies the detailed processing of step S305.

In step S311, the control unit 118 determines whether the current firmware of the electronic apparatus 100 is custom firmware. For example, the version of the firmware is stored as a three-digit number such as "1.3.2" in a specific area of the nonvolatile memory 109 that stores the firmware. For example, the first digit may be set to 9 (for example, "9.0.1") for custom firmware, and a number (for example, "1.0.1") other than 9 may be designated for standard firmware. When the determination result of step S311 indicates standard firmware, the control unit 118 advances to step S312, and when the determination result indicates custom firmware, the control unit 118 advances to step S313.

In step S312, the control unit 118 compares the version of the current firmware of the electronic apparatus 100 with the version of the firmware update file read out in step S305, and determines which of the versions is newer. When it is determined that the version of the current firmware of the electronic apparatus 100 is newer, the control unit 118 advances to step S314, and when it is determined that the version of the firmware update file read out in step S305 is newer, the control unit 118 advances to step S313.

In step S313, the control unit 118 determines that the version of the firmware update file read out in step S305 is newer and it is possible to update the firmware by the firmware update file stored in the recording medium 104. The control unit 118 temporarily stores, in the volatile memory 110, the determination result indicating that an update is possible, thereby ending the processing.

In step S314, the control unit 118 determines that the version of the current firmware of the electronic apparatus 100 is the latest and it is unnecessary to update the firmware, and temporarily stores, in the volatile memory 110, the determination result indicating that an update is unnecessary, thereby ending the processing.

When the determination result determined by the processes of steps S311 to S314 and stored in the volatile memory 110 indicates that an update is possible, the control unit 118 performs screen transition, as shown in Fig. 2. Screen transition is implemented when the control unit 118 controls each output destination (the display unit 113, the finder 114, and the external output terminal 115) via the output I/F 116. When the determination result indicates that an update is unnecessary, the control unit 118 ends the processing.

First, the control unit 118 presents a firmware menu 211 to be selectable by the user, as shown on a screen 201 of Fig. 2. When the screen transitions to a screen 202 by a user instruction, an "update from card" menu 212 is presented to be selectable by the user. When the user selects the "update from card" menu 212, the screen transitions to a screen 203, and the current version and the file name of the firmware update file are displayed. When the user selects the file name, the process advances to step S307.

In step S307, when a part of the firmware update file has been read out from the recording medium 104 in step S303, the control unit 118 loads all of the firmware update file from the recording medium 104 into the volatile memory 110. Note that when all of the firmware update file has been loaded in step S303, this processing need not be performed.

In step S308, the control unit 118 overwrites the firmware stored in the nonvolatile memory 109 with the update firmware data loaded into the volatile memory 110, and performs firmware update processing by reactivating the system. At the same time, the control unit 118 may notify the user of a firmware update status by displaying a progress bar as on a screen 204 of Fig. 2.

Processing in which the electronic apparatus 100 of the present embodiment updates the firmware via the network will be described next with reference to Figs. 2, 4A to 4E, and 5.

The electronic apparatus 100 of the present embodiment inquires of the server about firmware update information via the network, and compares the firmware update information with the firmware of the electronic apparatus 100, thereby updating the firmware of the electronic apparatus 100.

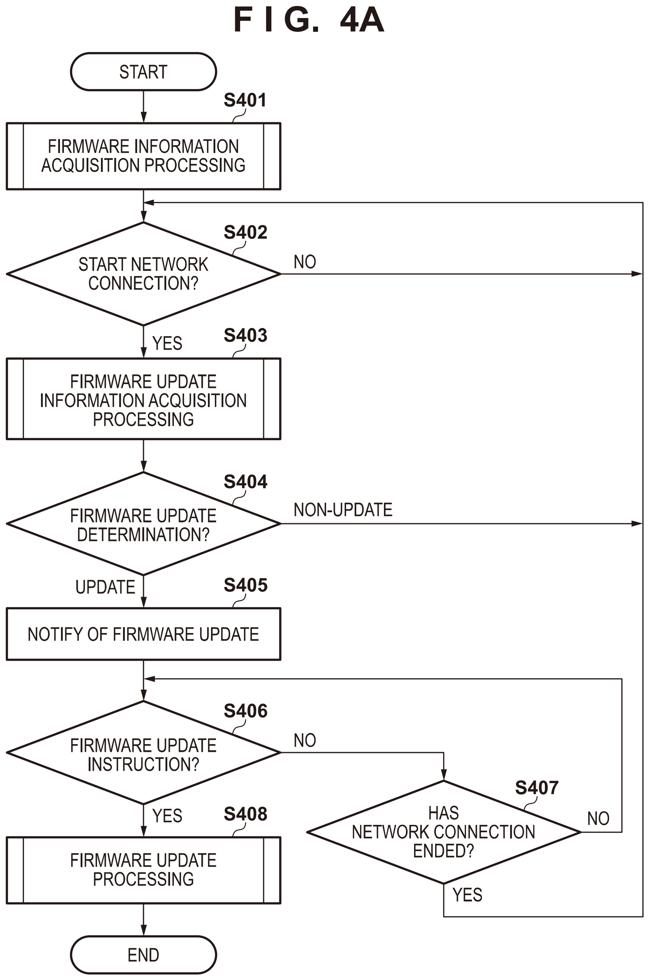

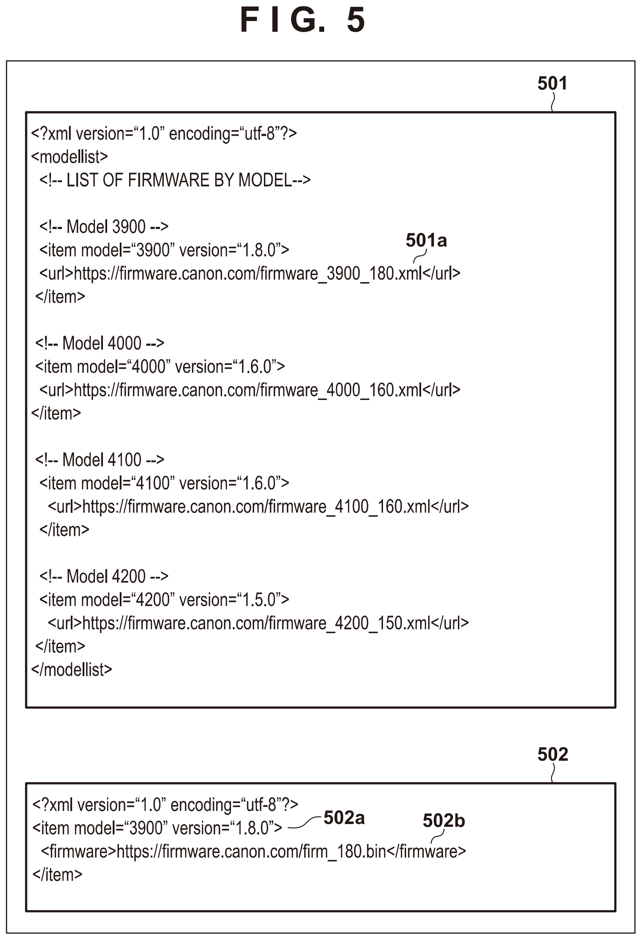

Fig. 2 is a view exemplifying screen transition at the time of a firmware update for the electronic apparatus 100 according to the present embodiment. Figs. 4A to 4E are flowcharts illustrating processing in which the electronic apparatus 100 of the present embodiment updates the firmware via the network. Fig. 5 is a view exemplifying firmware update information acquired from the server via the network.

In step S401, the control unit 118 performs processing of acquiring the firmware information of the electronic apparatus 100 for determining the type of the firmware of the electronic apparatus 100.

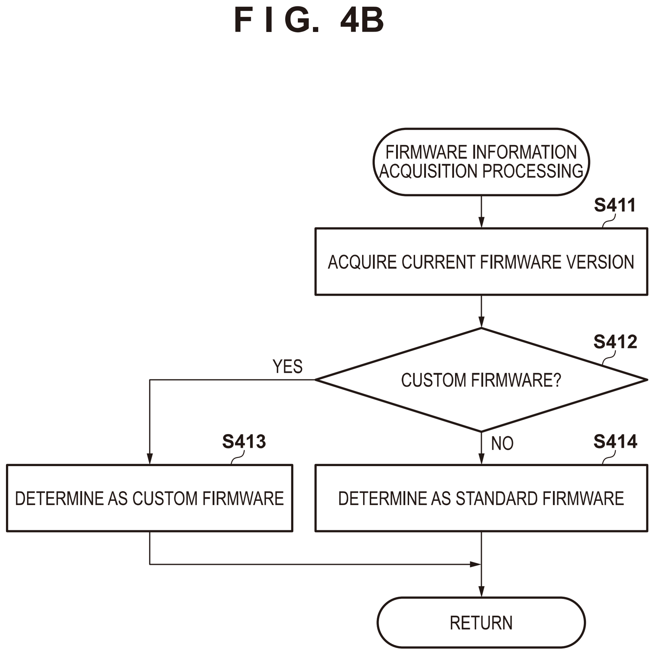

Fig. 4B exemplifies the detailed processing of step S401.

As described in step S311 of Fig. 3B, the version of the firmware is stored as a three-digit number such as "1.3.2" in a specific area of the nonvolatile memory 109 that stores the firmware. This embodiment will exemplify a case where the first digit is set to 9 (for example, "9.0.1") for custom firmware, and a number (for example, "1.0.1") other than 9 is designated for standard firmware.

In step S411, the control unit 118 obtains the current firmware version of the electronic apparatus 100 from the specific area of the nonvolatile memory 109.

In step S412, by referring to the first digit of the version of the current firmware of the electronic apparatus 100, the control unit 118 determines whether the current firmware is custom firmware. When it is determined that the current firmware of the electronic apparatus 100 is custom firmware, the control unit 118 advances to step S413, and when it is determined that the current firmware is standard firmware, the control unit 118 advances to step S414.

In step S413, the control unit 118 temporarily stores the determination result indicating custom firmware in the volatile memory 110, thereby ending the processing.

On the other hand, in step S414, the control unit 118 temporarily stores the determination result indicating standard firmware in the volatile memory 110, thereby ending the processing.

After executing the processing of step S401, the control unit 118 advances to step S402, and determines whether to cause the communication unit 119 to start network connection. When network connection starts, the control unit 118 advances to step S403, and when network connection does not start, the control unit 118 repeats the determination processing of step S402 at intervals, for example, for every predetermined period or at the next connection timing event.

When connection to the network is performed in step S401, the control unit 118 advances to step S403.

In step S403, the control unit 118 executes processing of acquiring firmware update information for determining the presence/absence of update firmware of the electronic apparatus 100 by communicating with the server.

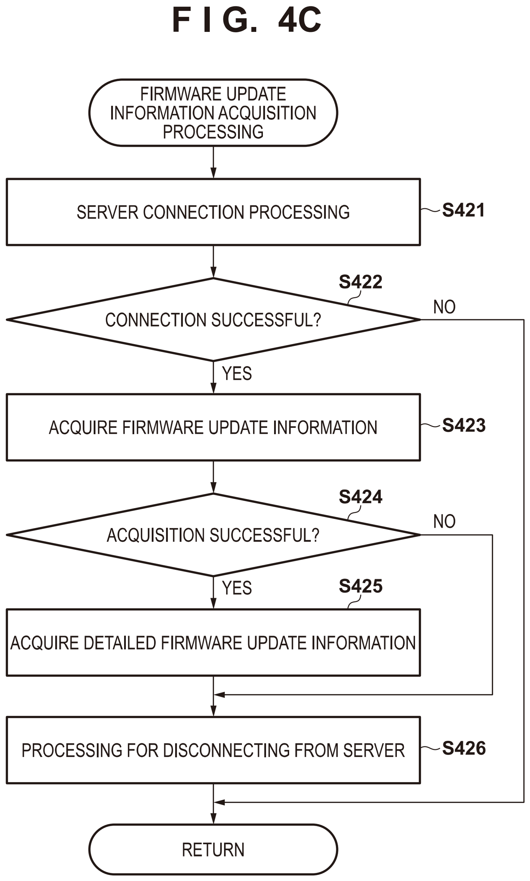

Fig. 4C exemplifies the detailed processing of step S403.

In step S421, the control unit 118 causes the communication unit 119 to make a connection to the server that releases the firmware update information. The control unit 118 performs, for example, Hypertext Transfer Protocol Secure (https) communication, thereby making a connection to the server.

The control unit 118 determines whether the connection processing of step S421 has succeeded. When the connection processing has succeeded, the control unit 118 advances to step S423, and when the connection processing has failed, the control unit 118 ends the processing. Note that when the connection processing has failed, connection retry processing may be executed a predetermined number of times.

In step S423, the control unit 118 causes the communication unit 119 to perform https communication, thereby acquiring update firmware information 501 shown in Fig. 5. In the present embodiment, for example, the update firmware information may be in a text format described by Extensible Markup Language (XML). The update firmware information 501 includes update firmware information for each model of the electronic apparatus. For example, when the model of the electronic apparatus 100 is 3900, it is possible to search for the update firmware information with reference to a "model" attribute indicated by text 501a. In the example shown in Fig. 5, it is possible to distinguish that the version of the update firmware is "1.8.0" indicated by a "version" attribute and detailed information can be acquired from "https://firmware.canon.com/firmware_3900_180.xml" described in a "url" tag.

In step S424, the control unit 118 determines whether the update information acquiring processing of step S423 has succeeded. When the update information acquiring processing has succeeded, the control unit 118 advances to step S425, and when the update information acquiring processing has failed, the control unit 118 advances to step S426.

In step S425, the control unit 118 causes the communication unit 119 to perform https communication to obtain the URL described in the "url" tag, thereby acquiring detailed update firmware information 502 of the electronic apparatus 100. With reference to the detailed update firmware information 502 of the electronic apparatus 100, the control unit 118 can determine, from text 502a, that the "version" attribute is "1.8.0", and determine, from text 502b, that the firmware update file can be acquired from "https://firmware.canon.com/firm_180.bin" described in a "firmware" tag.

The control unit 118 stores the version of the update firmware of the text 502a and the URL of the firmware update file acquiring source of the text 502b in the volatile memory 110, thereby ending the processing of step S425.

In step S426, the control unit 118 ends the connection to the server, thereby ending the series of processes.

After the processing of step S403, in step S404, the control unit 118 executes processing of determining the appropriateness of the firmware update for the electronic apparatus 100.

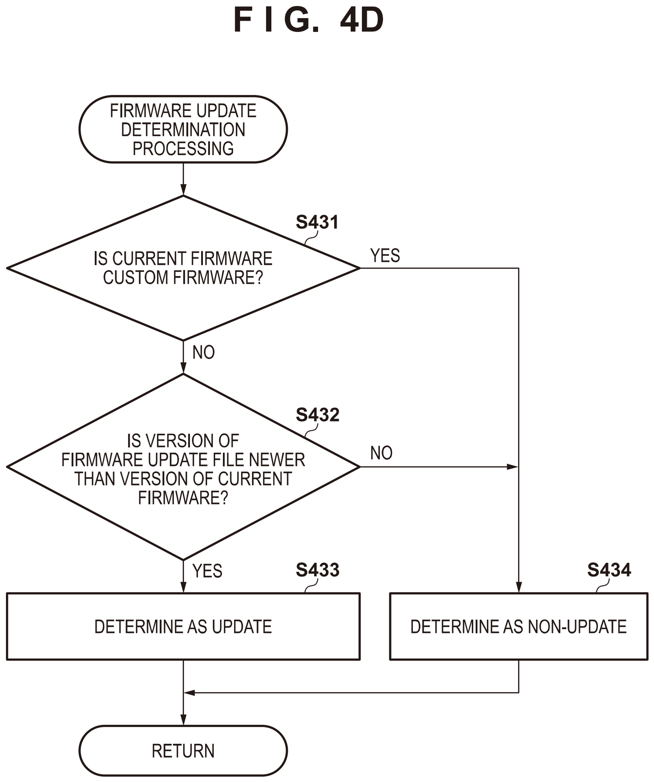

Fig. 4D exemplifies the detailed processing of step S404.

The processing of step S404 will be described by exemplifying a case where the version is stored as a three-digit number such as "1.3.2" in a specific area of the nonvolatile memory 109 that stores the firmware, the first digit is set to 9 (for example, "9.0.1") for custom firmware, and a number (for example, "1.0.1") other than 9 is designated for standard firmware, as described in step S311 of Fig. 3B.

In step S431, the control unit 118 determines whether the current firmware of the electronic apparatus 100 is custom firmware. When the current firmware is custom firmware, the control unit 118 advances to step S434, and when the current firmware is standard firmware, the control unit 118 advances to step S432.

In step S432, the control unit 118 determines whether the version (version 1.8.0) of the update firmware of text 502a is newer than the version of the current firmware of the electronic apparatus 100, by comparing the magnitudes of the numbers. In the present embodiment, for example, when the version of the current firmware of the electronic apparatus 100 is 1.0.0 to 1.7.9, it can be determined that the version of the update firmware is newer. When it can be determined that the version of the update firmware is newer, the control unit 118 advances to step S433, and when it can be determined that the version of the current firmware of the electronic apparatus 100 is newer, the control unit 118 advances to step S434.

In step S433, the control unit 118 determines whether the firmware update for the electronic apparatus 100 is appropriate, and stores the update determination result indicating update in the volatile memory 110, thereby ending the processing.

In step S434, since the type of the current firmware of the electronic apparatus 100 is different from the type of the update firmware, the control unit 118 determines that firmware update for the electronic apparatus 100 is inappropriate. The control unit 118 stores the update determination result indicating non-update in the volatile memory 110, thereby ending the processing.

When the update determination result in step S404 indicates non-update, the process returns to step S402 without making a firmware update notification, and when the update determination result indicates an update, the process advances to step S405, and a firmware update notification is made.

In step S405, when the user performs an operation of opening the menu by the operation unit 106, the control unit 118 executes a firmware update notification. The control unit 118 refers to the firmware update determination result stored in step S434.

When the firmware update determination result indicates an update, the control unit 118 controls each output destination (the display unit 113, the finder 114, and the external output terminal 115) via the output I/F 116 to present that firmware update is possible. The control unit 118 presents that firmware update is possible by displaying a menu 201a and a mark "*" 201b on the screen 201. In addition, the control unit 118 performs processing of presenting an "update from the Internet" menu 213 on the screen 202 to be selectable by the user.

In step S406, the control unit 118 determines whether the user operates the operation unit 106 to select the firmware menu 211 on the screen 201 and further select the "update from the Internet" menu 213 on the screen 202. When it is determined that such selection is not performed, the control unit 118 advances to processing in step S407, and when it is determined that such selection is performed, the control unit 118 displays a screen 205, and advances to step S408 upon selection of "OK" on the screen 205.

In step S407, the control unit 118 determines whether the network connection has ended. When it is determined that the connection has ended, the control unit 118 returns to step S402. When the connection has not ended, the control unit 118 returns to step S406 to repeat the processing, and waits for a user operation again.

In step S408, the control unit 118 performs firmware downloading and firmware update processing via the network.

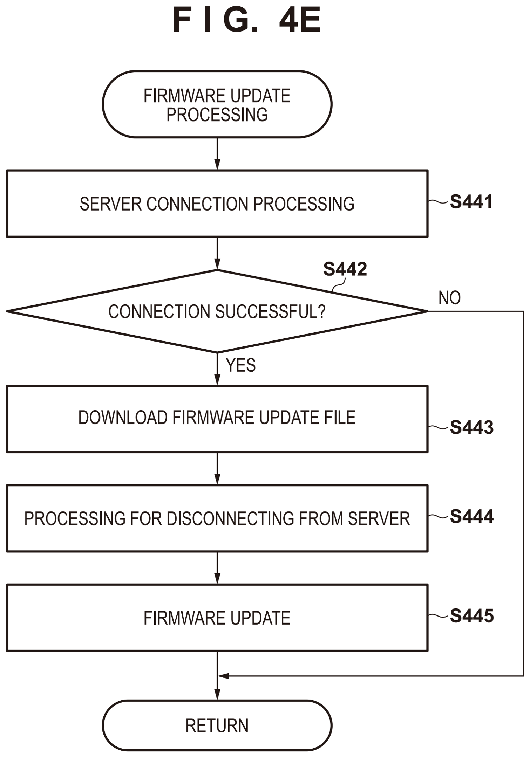

Fig. 4E exemplifies details of the processing of step S408.

In step S441, the control unit 118 causes the communication unit 119 to make a connection to the server that releases firmware update information. For connection to the server, for example, connection by https or the like is used.

In step S442, the control unit 118 determines whether the connection processing of step S441 has succeeded. When the connection processing has succeeded, the control unit 118 advances to step S443, and when the connection processing has failed, the control unit 118 ends the processing. Note that when the connection processing has failed, connection retry processing may be executed a predetermined number of times.

In step S443, the control unit 118 causes the communication unit 119 to perform https communication, obtains, from the server, the firmware update file from the URL of the firmware update file acquiring source of the text 502b, and stores it in the volatile memory 110. Furthermore, the firmware update file stored in the volatile memory 110 is stored in the recording medium 104. Note that during the processing of storing the firmware update file, the download progress may be displayed as a progress bar, as shown on a screen 206.

Upon completion of the processing of step S443, the control unit 118 displays a screen 207 and advances to step S444.

In step S444, the control unit 118 disconnects the https communication from the server, and advances to step S445.

In step S445, the control unit 118 waits for the user to operate the "OK" button on the screen 207. When the "OK" button is operated, the control unit 118 performs update processing of the firmware of the electronic apparatus 100. In the update processing of the firmware of the electronic apparatus 100, the processes of steps S301 to S308 described with reference to Fig. 3 may be used by using the fact that the firmware update file is stored in the recording medium 104.

In a firmware update via the network, by performing the processes of steps S401 to S408, the user is not notified of the firmware update in a case where the firmware of the electronic apparatus 100 is custom firmware, and the user is notified of the firmware update in a case where the firmware is standard firmware. When the user stores the update firmware in the recording medium 104, and intentionally performs a firmware update operation, it is possible to update the custom firmware to the standard firmware.

Note that the present embodiment has explained an example in which the version of the firmware is stored as a three-digit number such as "1.3.2" in a specific area of the nonvolatile memory 109 that stores the firmware, the first digit is set to 9 (for example, "9.0.1") for custom firmware, and a number (for example, "1.0.1") other than 9 is designated for standard firmware.

However, as a method of determining whether the firmware is custom firmware, for example, the last digit of the version information may be set to a specific number. To determine whether the firmware is custom firmware, specific data stored in the nonvolatile memory 109 may be used instead of the version definition.

According to the above-described first embodiment, in firmware update via the network, when the firmware of the electronic apparatus 100 is custom firmware, no firmware update notification is made. This can prevent the user from inadvertently updating the custom firmware to the standard firmware.

### [Second Embodiment]

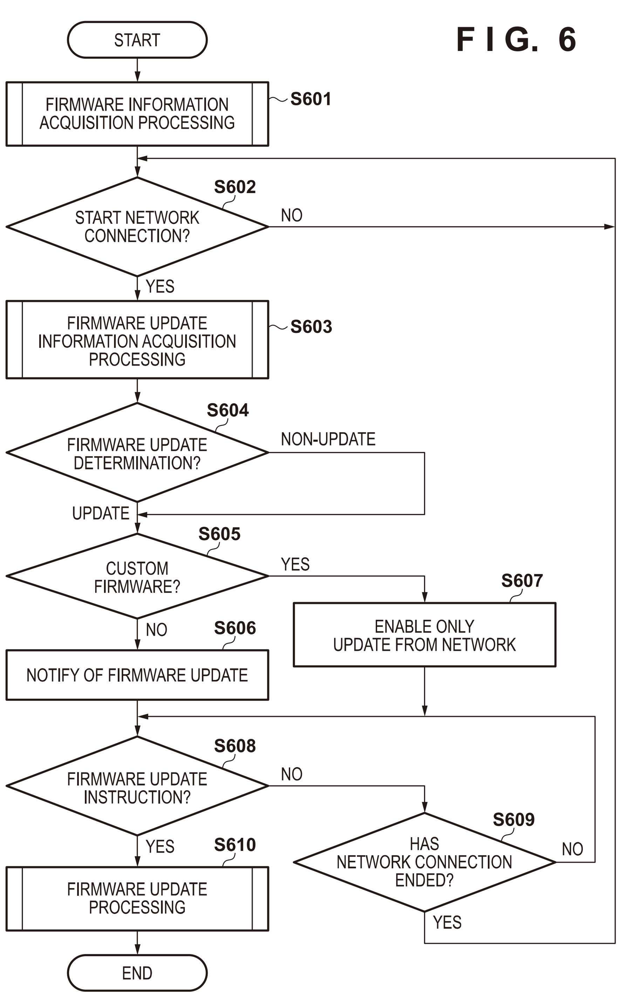

The second embodiment will be described next with reference to Figs. 2 and 6.

The first embodiment has explained an example in which in a firmware update via the network, when the firmware of the electronic apparatus 100 is custom firmware, no firmware update notification is made. To the contrary, the second embodiment will describe an example of notifying, in advance, the user of an update from custom firmware to standard firmware.

Fig. 6 is a flowchart exemplifying processing of updating the firmware of an electronic apparatus 100 via the network according to the present embodiment.

Steps S601 to S603 are the same as steps S401 to S403 of Fig. 4A.

In step S604, a control unit 118 advances to step S605 regardless of whether a firmware update determination result indicates an update or non-update.

In step S605, the control unit 118 determines whether the firmware of the electronic apparatus 100 is custom firmware. When the firmware is custom firmware, the control unit 118 advances to step S607, and when the firmware is standard firmware, the control unit 118 advances to step S606.

In step S606, the control unit 118 controls each output destination (a display unit 113, a finder 114, and an external output terminal 115) via an output I/F 116 to notify the user that firmware update is possible. The control unit 118 displays a menu 201a and a mark "*" 201b on a screen 201 shown in Fig. 2, thereby notifying the user that firmware update is possible. Furthermore, the control unit 118 controls the output destination to present an "update from the Internet" menu 213 on a screen 202 to be selectable by the user.

In step S607, the control unit 118 controls each output destination (the display unit 113, the finder 114, and the external output terminal 115) via the output I/F 116, and performs control to perform processing of presenting only the "update from the Internet" menu 213 on the screen 202 to be selectable by the user.

Steps S608 to S610 are the same as steps S406 to S408 of Fig. 4A.

In the present embodiment, by performing the processes of steps S604 to S607, no firmware update notification is made (the mark "*" 201b on the screen 201 is not displayed) while allowing custom firmware to be updated. This can present the "update from the Internet" menu 213 on the screen 202 to be selectable by the user only when the user explicitly performs an update firmware confirmation operation.

Note that in step S608, when "OK" is selected on a screen 205, the control unit 118 displays a screen 208 to warn that the custom firmware is to be changed to the standard firmware, and may advance to step S610 when the user approves the firmware update.

According to the above-described second embodiment, in a firmware update via the network, the user is notified in advance of the update from the custom firmware to the standard firmware. This can prevent the user from inadvertently updating the custom firmware to the standard firmware, and update the firmware only when the user intends to do so.

### [OTHER EMBODIMENTS]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An electronic apparatus (100) comprising:
first determination means (118) configured to determine the presence/absence of update firmware of the electronic apparatus by communicating with an external apparatus; and
second determination means (118) configured to determine appropriateness of a firmware update for the electronic apparatus,
wherein in a case where a type of the firmware of the electronic apparatus is different from a type of the update firmware, the second determination means determines that the firmware update is inappropriate.

2. The apparatus according to claim 1, further comprising:
notification means (113, 114, 115, 205) configured to notify, in a case where the second determination means determines that the firmware update is appropriate, that the update firmware is present; and
control means (118) configured to control not to make the notification in a case where the second determination means determines that the firmware update is inappropriate.

3. The apparatus according to claim 2, further comprising:
updating means (118, 206) configured to update, in a case where a user operation of updating the firmware of the electronic apparatus to the update firmware is accepted, the firmware of the electronic apparatus to the update firmware.

4. The apparatus according to claim 1 or 2, wherein
the type of the firmware of the electronic apparatus includes first firmware for a specific customer, and second firmware for an unspecified customer.

5. The apparatus according to claim 4, further comprising:
notification means (113, 114, 115) configured to notify, in a case where the second determination means determines that the firmware update is appropriate and the firmware of the electronic apparatus is the second firmware, that the update firmware is present; and
presentation means (118, 208) configured to present, in a case where the second determination means determines that the firmware update is inappropriate and the firmware of the electronic apparatus is the first firmware, whether to update the firmware of the electronic apparatus to the update firmware, to be selectable by a user.

6. The apparatus according to claim 5, further comprising:
updating means (118, 206) configured to update, in a case where a user operation of updating the firmware of the electronic apparatus to the update firmware is accepted, the firmware of the electronic apparatus to the update firmware.

7. The apparatus according to any one of claims 4 to 6, further comprising:
first acquisition means (109, 118) configured to obtain version information of the firmware of the electronic apparatus; and
third determination means (118) configured to determine, based on the version information of the firmware of the electronic apparatus, whether the firmware of the electronic apparatus is the first firmware or the second firmware.

8. The apparatus according to claim 7, further comprising:
second acquisition means (118, 119) configured to obtain information of the update firmware from the external apparatus,
wherein the second determination means determines the appropriateness of the firmware update for the electronic apparatus based on the information of the update firmware and the type of the firmware of the electronic apparatus.

9. The apparatus according to any one of claims 4 to 8, wherein
in a case where the firmware of the electronic apparatus is the first firmware, the second determination means determines that the firmware update for the electronic apparatus is inappropriate.

10. The apparatus according to any one of claims 4 to 9, wherein
in a case where the firmware of the electronic apparatus is the second firmware, and the update firmware of the electronic apparatus is newer than the current firmware of the electronic apparatus, the second determination means determines that the firmware update for the electronic apparatus is appropriate.

11. The apparatus according to claim 3 or 6, further comprising:
third acquisition means (118, 119) configured to obtain the update firmware of the electronic apparatus from the external apparatus; and
storage means (104, 110) configured to store the update firmware acquired from the external apparatus.

12. The apparatus according to any one of claims 1 to 11, further comprising:
updating means (118, 203, 204) configured to update, in a case where the update firmware is stored in a recording medium attached to the electronic apparatus, the firmware of the electronic apparatus to the update firmware without determining the appropriateness of the firmware update for the electronic apparatus.

13. A control method of an electronic apparatus, comprising:
a step of determining (S303) the presence/absence of update firmware of the electronic apparatus by communicating with an external apparatus; and
a step of determining (S404) appropriateness of a firmware update for the electronic apparatus,
wherein in the step of determining the appropriateness, in a case where a type of the firmware of the electronic apparatus is different from a type of the update firmware, it is determined that the firmware update is inappropriate.

14. A computer program comprising instructions which, when the program is executed by a computer, cause the computer to carry out the method of claim 13.
